# EUROPÄISCHE PATENTANMELDUNG

(11) **EP 1 557 708 A2**
(43) Veröffentlichungstag der Anmeldung: **27.07.2005**
(21) Anmeldenummer: 05008916.8
(22) Anmeldetag: 04.09.2002
(51) Int. Cl.: G02B 21/06, G02B 21/00, G02B 21/02

(54) **Mikroskop mit evaneszenter Beleuchtung**

(30) Priorität: 05.09.2001 DE 10143481
(62) Teilanmeldung aus: 02776983.5
(71) Anmelder: EUROPÄISCHES LABORATORIUM FÜR MOLEKULARBIOLOGIE (EMBL), D-69117 Heidelberg (DE)
(72) Erfinder: Tischer, Christian, 69121 Heidelberg (DE); Florin, Ernst-Ludwig, Austin, TX 78759 (US)
(74) Vertreter: Prechtel, Jörg, Dipl.-Phys. Dr.

(57) **Zusammenfassung**

Es wird ein Mikroskop vorgeschlagen mit einem Mikroskopgehäuse (18), einem Objektiv (16) aus mindestens einem jeweils mindestens eine Linse (48) umfassenden Linsensystem an einem Ende eines Durchgangs (19) des Mikroskopgehäuses (18), wenigstens eine Beobachtungseinrichtung, insbesondere ein Okular, an einem anderen Ende des Durchgangs (19), einer Beleuchtungseinrichtung, deren Beleuchtungslichtvon einerden Durchgang (19) senkrecht schneidenden Eintrittsebene (45) ausgehend wenigstens einen Beleuchtungsstrahl (44) bildet, der durch das Linsensystem verläuft und in einem vorgegebenen Winkel (β) auf einen Objektträger (36) auftrifft. Bei dem vorgeschlagenem Mikroskop wird der von der Eintrittsebene (45) ausgehende wenigstens eine Beleuchtungsstrahl (44) von einer optischen Einrichtung bereitgestellt, deren im Bereich des Durchgangs (19) liegender Querschnitt wesentlich kleiner als der Querschnitt des Durchgangs (19) ist.

## Beschreibung

Die Erfindung betrifft ein Mikroskop umfassend
- ein Mikroskopgehäuse,
- ein Objektiv aus mindestens einem jeweils mindestens eine Linse umfassenden Linsensystem an einem Ende eines Durchgangs des Mikroskopgehäuses,
- wenigstens eine Beobachtungseinrichtung, insbesondere ein Okular, an einem anderen Ende des Durchgangs,
- eine Beleuchtungseinrichtung, deren Beleuchtungslicht von einer den Durchgang senkrecht schneidenden Eintrittsebene ausgehend wenigstens einen Beleuchtungsstrahl bildet, der durch das Linsensystem verläuft und in einem vorgegebenen Winkel auf einen Objektträger auftrifft.

Ein derartiges Mikroskop ist bekannt (Biochemical and Biophysical Research Communications, 235, 47 - 53). Es dient in erster Line der unter dem Begriff TIRM (= Total Internal Reflection Microscopy) bekannten Mikroskopiertechnik. Bei dieser wird der Beleuchtungsstrahl an einer zwischen dem Objektträger und dem Objekt gebildeten Grenzfläche totalreflektiert (Brechungsindex des Objektträgers größer als der Brechungsindex des Objekts), wobei der Beleuchtungsstrahl innerhalb des Objektträgers verläuft, so dass vom Reflexionspunkt ausgehend ein evaneszentes Lichtfeld in das Objekt eindringt mit exponentiellem Intensitätsabfall. Dieses Lichtfeld dient der streng lokal begrenzten Beleuchtung objektträgernaher Bereiche des Objektes. Diese Bereiche können dann in üblicher Weise über Objektiv und Beobachtungseinrichtung, z. B. ein Okular oder eine Kamera, des Mikroskops untersucht werden.

Bei einer von zwei möglichen TIRM-Anordnungen befindet sich das Objekt auf der dem Mikroskop zugewandten Seite des Objektträgers mit entsprechender Führung des Beleuchtungsstrahls nach Art einer Gegenlichtanordnung (siehe beispielsweise Nature Vol. 374, Seiten 555 - 559 oder Topics in Fluorescence Spetroscopy, Vol. 3, ed. by J. Lakowicz, Plenum Press, New York, 1992, Seite 314 ff.). Die hierzu alternative Auflichtanordnung mit Anordnung des Objekts auf der vom Mikroskop abgelegenen Seite des Objektträgers wird in dem eingangs genannten Stand der Technik angewandt. Das Beleuchtungslicht wird hier von einem Laser außerhalb des Durchgangs des Mikroskops ausgehend über ein Spiegelsystem auf einen dichroitischen Strahlteiler-Spiegel im Durchgang gerichtet und dann parallel zur optischen Achse dem Beobachtungsstrahlengang folgend durch das Objektiv hindurch auf Objektträger und Objekt gerichtet. Der dichroitische Spiegel beeinträchtigt hierbei die mikroskopische Objektbeobachtung, da er den gesamten Querschnitt des Durchgangs durchsetzt und damit die durch das Okular beobachtbare Lichtstrahlung wellenlängenabhängig schwächt.

Der Erfindung liegt die Aufgabe zugrunde, ein Mikroskop der eingangs genannten Art mit möglichst geringer Beeinträchtigung der Mikoskopiermöglichkeiten, insbesondere hinsichtlich der möglichen Wellenlängen des Beleuchtungs- bzw. Beobachtungslichts, bereitzustellen.

Diese Aufgabe wird dadurch gelöst, dass der von der Eintrittsebene ausgehende wenigstens eine Beleuchtungsstrahl von einer optischen Einrichtung bereitgestellt wird, deren im Bereich des Durchgangs liegender Querschnitt wesentlich kleiner als der Querschnitt des Durchgangs ist.

Die Position der Eintrittsebene kann in dem Durchgang zwischen der Frontlinse des Objektivs und der Beobachtungseinrichtung beliebig gewählt werden, wobei auch ein seitliche Einkopplung in die Frontlinse möglich ist. Dadurch, dass das Beleuchtungslicht auf wenigstens einen Beleuchtungsstrahl konzentriert wird, können dementsprechend lokal begrenzte Strahlführungselemente eingesetzt werden, die den Beobachtungsstrahlengang des Mikroskops allenfalls geringfügig beeinträchtigen (in aller Regel außerhalb der optischen Achse). Dieser feine Beleuchtungsstrahl kann ohne weitere Maßnahmen durch das durchstrahlte Linsensystem (ggf. die Front-linse) des Objektivs geschickt werden. Insbesondere kann auf die Verwendung jeglicher Strahlteilereinrichtungen, die den Durchgang durchsetzen, zur Einkopplung des Beleuchtungslichtes verzichtet werden.

Als Lichtquelle für das Beleuchtungslicht kommt beispielsweise ein Laser in Frage, der ein Beleuchtungsstrahlenbündel aus parallelen Einzelstrahlen mit im Wesentlichen punktförmigem Strahlquerschnitt abgibt. Bevorzugt ist jedoch vorgesehen, dass der wenigstens eine Beleuchtungsstrahl in der der Beobachtungseinrichtung zugewandten Brennebene, im Folgenden auch hintere Brennebene genannt, des durchstrahlten Linsensystems des Objektivs in dem Punkt reell oder virtuell fokussiert ist. Hierdurch erreicht man, dass der vom Punkt in der Brennebene als divergierendes Strahlenbündel ausgehende Beleuchtungsstrahl nach Durchgang durch das Linsensystem von einem Strahlenbündel aus parallel verlaufenden Einzelstrahlen gebildet wird, die sämtliche in gleicher Weise die Totalreflexionsbedingung erfüllen.

Der Beleuchtungsstrahl könnte prinzipiell auch geneigt zur optischen Achse durch das Linsensystem des Objektivs verlaufen. Bevorzugt ist jedoch vorgesehen, dass der wenigstens eine Beleuchtungsstrahl im Wesentlichen parallel zur optischen Achse durch das durchstrahlte Linsensystem des Objektivs verläuft. Der Beleuchtungsstrahl kann hierbei sowohl ausserhalb der optischen Achse als auch entlang der optischen Achse durch das durchstrahlte Linsensystem des Objektivs fallen. Je weiter der Beleuchtungsstrahl in radialer Richtung von der optischen Achse entfernt durch das Linsensystem des Objektivs fällt, desto größer wird der Reflexionswinkel des Beleuchtungsstrahls an der Grenzfläche zwischen Objektträger und Objekt. Um die Totalreflexionsbedingung zu erfüllen, wird man deshalb bevorzugt eine Anordnung wählen, bei der der Beleuchtungsstrahl in der Nähe des Randes der Aperturblende des Objektivs durch das durchstrahlte Linsensystem des Objektivs verläuft. Eine besondere Anwendung erhält man, wenn der Beleuchtungsstrahl im Zentrum des Durchgangs entlang der optischen Achse durch das durchstrahlte Linsensystem des Objektivs verläuft. In diesem Fall trifft der Beleuchtungsstrahl im Wesentlichen rechtwinklig auf die Grenzfläche zwischen Objektträger und Objekt auf, so dass er entlang desselben Weges in das Mikroskop zurückreflektiert wird. Auf diese Weise wird es möglich, ein Mikroskop mit Auflichtanordnung zu realisieren, bei dem das vom Objekt zurückreflektierte Licht beobachtet werden kann, ohne dass Strahlteilereinrichtungen, die das Beobachtungslicht beeinträchtigen, verwendet werden müssen, da durch die den Beleuchtungsstrahl bereitstellende Einrichtung lediglich ein kleiner Bereich im Zentrum des Gesichtsfeldes des Mikroskops abgedeckt wird.

Besonders bevorzugt ist vorgesehen, dass der wenigstens eine Beleuchtungsstrahl in radialer Richtung in Bezug auf die optische Achse verlagerbar ist. Die seitliche Verlagerung lässt sich durch technisch einfache Mittel erreichen, insbesondere durch in radialer Richtung (in Bezug auf die optische Achse) verlagerbare Umlenkspiegel, Umlenkprismen oder dergleichen. Eine Verlagerung in radialer Richtung führt unmittelbar zu einer entsprechenden Veränderung des Reflexionswinkels an der Grenzschicht zwischen Objektträger und Objekt. Der von Fall zu Fall variierende Totalreflexionswinkel (abhängig von den Brechungsindizes von Objektträger und Objekt) läßt sich in gewünschter Weise einstellen. Weiterhin hängt die Eindringtiefe des Lichtfeldes in das Objekt hinter der Grenzfläche, an der Totalreflexion auftritt, vom Einfallswinkel des Lichtstrahls ab. Somit lässt sich die Tiefe des beleuchteten Objektvolumens durch die radiale Verlagerung des Beleuchtungsstrahls verändern. Weiterhin kann die Tiefe des beleuchteten Volumens auch durch die Wahl von Beleuchtungslicht unterschiedlicher Wellenlänge variiert werden. Da das erfindungsgemäße Mikroskop die Verwendung von Beleuchtungslicht beliebiger Wellenlängen zulässt, ist eine kontinuierliche Veränderung des beleuchteten Objektvolumens auch auf diese Weise möglich. Eine gezielte Veränderung des beleuchteten Objektvolumens und Beobachtung der Intensität des von diesem Volumen ausgehenden Lichtes lässt sich beispielsweise zur Bestimmung der Größe eines sich im Bereich dieses Objektvolumens befindlichen Objektes ausnutzen, da sich die Eindringtiefe des Beleuchtungslichtes aus seiner Wellenlänge und dem eingestellten Totalreflexionswinkel berechnen lässt (siehe hierzu, z. B. Topics in Fluorescence Spectroscopy, Vol. 3, Plenum Press, New York, 1992, Seite 289 ff.).

Ferner wird vorgeschlagen, dass der Divergenzwinkel des wenigstens einen, von der Eintrittsebene ausgehenden Beleuchtungsstrahls veränderbar ist. Eine Veränderung des Divergenzwinkels hat eine dementsprechende Veränderung des Querschnitts des aus dem Linsensystem austretenden Beleuchtungsstrahls und damit der Größe des beleuchteten Bereichs im Objekt zur Folge.

Der Divergenzwinkel kann erfindungsgemäß durch Verstellung einer Aperturblende im Strahlengang des Beleuchtungsstrahls variiert werden oder durch Variation der Brennweite der den Beleuchtungsstrahl in der hinteren Brennebene fokussierenden optischen Einheit.

Wird eine möglichst gleichmäßige Ausleuchtung des Objekts verlangt, so wird bevorzugt ein inkohärenter Beleuchtungsstrahl eingesetzt. Ist dagegen erhöhte Ortsauflösung bzw. strukturierte Beleuchtung gewünscht, so wird bevorzugt ein bzw. mehrere im Wesentlichen kohärente Beleuchtungsstrahlen eingesetzt mit der Möglichkeit der Interferenz im Bereich des Objekts.

Befindet sich das zu beobachtende Objekt im Bereich der optischen Achse, so wie dies generell der Fall ist, wird der totalreflektierte Anteil des Beleuchtungsstrahls zumindest dann in das Objektiv zurückreflektiert, wenn der Objektträger senkrecht zur optischen Achse angeordnet ist. Normalerweise wird bei der TIR-Mikroskopie von dem beleuchteten Teil des Objekts ausgehendes Fluoreszenzlicht beobachtet, welches Informationen über das Objekt enthält. Um die mikroskopische Beobachtung des Objekts nicht zu beeinträchtigen, wird erfindungsgemäß der zurückreflektierte Anteil des Beleuchtungsstrahls, der Reflexionsstrahl, absorbiert, am besten durch einen. Absorber oder einen Filter unmittelbar hinter dem durchstrahlten Linsensystem. Alternativ oder zusätzlich kann der Reflexionsstrahl auch detektiert werden, sei es zur Justage der Anordnung, insbesondere zur Einstellung des Totalreflexionswinkels und/oder für Absorptionsmessungen am Objekt. Hierfür kann eine Detektionseinrichtung im Bereich des Durchgangs vorgesehen sein. Durch die Beobachtung von Absorptionsvorgängen an der Grenzfläche zwischen Objektträger und Objekt in Abhängigkeit von der Wellenlänge des verwendeten Beleuchtungsstrahls können auch aus dem Reflexionsstrahl zusätzliche Informationen über das Objekt gewonnen werden. Hierfür ist insbesondere wichtig, dass Licht beliebiger Wellenlänge beobachtet werden kann, wie dies erfindungsgemäß der Fall ist.

Größere Freiheit in der Anordnung und Ausbildung der Detektionseinrichtung erhält man dann, wenn der Reflexionsstrahl mittels einer Umlenkeinheit im Bereich des Durchgangs aus dem Mikroskopstrahlengang herausgeführt wird. Eine entsprechende Umlenkeinheit kann auch zur Einkopplung des Beleuchtungsstrahls in das Mikroskop vorgesehen sein. Auch hier erhält man den Vorteil einer größeren Freiheit in der Anordnung und Ausgestaltung von Lichtquelle und Strahlführung mittels entsprechender optischer Systeme der Beleuchtungseinrichtung. Nichtsdestoweniger kann es in bestimmten Situationen, etwa wenn nicht ausreichend Raum für externe Lichtquellen zur Verfügung steht, von Vorteil sein, eine Lichtquelle mit möglichst punktförmigen Querschnitt, z. B. eine Laserdiode, direkt in den Durchgang im Bereich der Eintrittsebene zu plazieren.

In einer ersten Ausführungsform der Erfindung umfasst die Umlenkeinheit ein Prisma. Die Umlenkung erfolgt dann durch Totalreflexion an einer der Prismenflächen. Das Beobachtungsfeld des Mikroskops wird vom Prisma nur wenig beeinträchtigt. Es lässt sich in einfacher Weise haltern und montieren. Eine bewegliche Lagerung zur Justierung des Strahlengangs, insbesondere zur Anpassung des Reflexionswinkels durch Verschiebung in radialer Richtung, lässt sich mit geringem baulichem Aufwand verwirklichen. So kann beispielsweise ein Stabprisma eingesetzt werden mit Umlenkprismenfläche im Durchgang sowie Linearbewegungsführung und Halterung außerhalb des Durchgangs.

Je nach den gewünschten Anforderungen stehen Prismen in unterschiedlichen Formen und Ausbildungen zur Verfügung. In der Grundversion wird ein 90°-Prisma eingesetzt. Das Prisma kann abgerundet sein, um das Beobachtungsfeld möglichst wenig zu beeinträchtigen. An Stelle der 90°-Anordnung können auch andere Winkel gewählt werden. Besondere Vorteile hinsichtlich der Fexibilität der Einbringung des Beleuchtungsstrahls bietet die Kopplung einer Lichtfaser mit einem Umlenkprisma.

In Fällen, in denen eine Dispersion des Beleuchtungsstrahls vermieden werden soll oder die Wellenlänge des Beleuchtungsstrahls variiert wird, kann an Stelle des Prismas auch ein Umlenkspiegel eingesetzt werden. Im Allgemeinen wird man einen ebenen Umlenkspiegel einsetzen. Es ist jedoch auch der Einsatz eines gekrümmten Spiegels denkbar, der der Fokussierung des Strahls in der hinteren Brennebene dienen kann, so dass entsprechende Linsenelemente wegfallen können.

Bei der erfindungsgemäßen Anordnung wird wenigstens ein Beleuchtungsstrahl eingesetzt, wobei jeweiligen Anforderungen entsprechend auch mehrere Beleuchtungsstrahlen Verwendung finden können. In einem solchen Fall wird mit Vorteil eine Umlenkeinrichtung eingesetzt, in der eine entsprechende Vielzahl von Umlenkeinheiten baulich integriert ist. In diesem Falle ist die Umlenkeinrichtung bevorzugt angenähert ringförmig ausgebildet und konzentrisch zur optischen Achse angeordnet. An diesem Ring sind dann die entsprechend geneigten Reflexionsflächen (Spiegelflächen bzw. Prismenflächen) ausgebildet. Weiterhin ist es möglich, den Beleuchtungsstrahl durch einen gekrümmten Lichtleiter in den Strahlengang des Mikroskops einzuführen. In diesem Falle wird die Umlenkeinheit vom gekrümmten Lichtleiter selbst gebildet.

Die erfindungsgemäße Anordnung aus einzelnen Beleuchtungsstrahlen, insbesondere aus einem einzigen Beleuchtungsstrahl, ermöglicht die Beleuchtung des Objekts mit einem aus einer einzigen Richtung kommenden Beleuchtungsstrahl. Bei räumlich komplexen Gebilden, wie z. B. Zellen, können sich je nach Einstrahlrichtung des Beleuchtungsstrahls unterschiedliche Bilder des Objekts ergeben. Man erhält hierdurch zusätzlich Informationen über das Objekt. Es kann in solch einem Falle daher von Vorteil sein, wenn, wie erfindungsgemäß vorgeschlagen, die wenigstens eine Umlenkeinheit oder, falls eine Lichtquelle im Durchgang angeordnet ist, die Lichtquelle um die optische Achse rotierbar ist. Um den Reflexionsstrahl zu detektieren oder zu absorbieren, ist es zweckmäßig, ggf. auch die Detektions- bzw. Absorptionseinrichtung um die optische Achse zu drehen.

Die Rotation der Umlenkeinheit und damit die Rotation des auf die Probe einfallenden Beleuchtungsstrahls kann, wie ausgeführt, zwischen den Messungen vorgenommen werden, aber auch während einer Messung, um eine gleichmäßige Ausleuchtung des Objekts zu erhalten.

Da erfindungsgemäß über die wenigstens eine Umlenkeinheit das Beleuchtungslicht erst im Bereich des Objektivs in das Mikroskop eingekoppelt und ggf. dort auch wieder ausgekoppelt wird, kann der Beleuchtung des Objekts dienendes Licht, welches nicht Teil des Reflexionsstrahls ist und dennoch in das Mikroskop zurückreflektiert bzw. zurückgestreut ist, in einfacher Weise aus dem Beobachtungsstrahlengang entfernt werden, nämlich durch eine Filteranordnung auf der objektfernen Seite der wenigstens einen Umlenkeinheit.

Die erfindungsgemäße Beschränkung der Strahlführung des Beleuchtungsstrahls sowie des Reflexionsstrahls auf den Objektivbereich ermöglicht den Einsatz eines Adapters, der zwischen dem Objektiv und der Beobachtungseinrichtung angeordnet ist und der wenigstens die eine Umlenkeinheit oder ggf. die eine Lichtquelle aufweist. Mit Hilfe des Adapters lässt sich die Lichtquelle der Beleuchtungseinrichtung ohne Weiteres einkoppeln, wobei die Lichtquelle (im Falle dass sie sich nicht im Durchgang befindet) unabhängig von dem Adapter sein kann oder auch in den Adapter integriert sein kann. Wahlweise lässt sich der Adapter wieder entfernen oder gegen andere Adaptereinrichtungen austauschen, was einen vielfältigen Einsatz des Mikroskops zulässt. Bestehende Mikroskope können unter Umständen umgebaut bzw. nachgerüstet werden, indem bereits herkömmlicherweise vorgesehene Adaptereinsätze, insbesondere sog. DIC (Differentieller Interferenzkontrast)-Slider, die optische Komponenten aufweisen, welche zur DIC-Mikroskopie verwendet werden, gegen den erfindungsgemäßen Adapter ausgetauscht werden. Eine weitere einfache Möglichkeit, bestehende Mikroskope nachzurüsten, bietet ein Adapter, der zwischen dem Objektiv und dem Objektivanschluss des Mikroskopgehäuses angeordnet ist. Idealerweise weist ein solcher Adapter auf seiner dem Objektiv zugewandten Seite einen gleichartigen Anschluss auf wie der Objektivanschluss des Mikroskopgehäuses, in den normalerweise das Objektiv eingepasst wird. Weiterhin ist es vorteilhaft, wenn der Adapter auf seiner dem Mikroskopgehäuse zugewandten Seite einen gleichartigen Anschluss wie der dem Mikroskopgehäuse zugewandte Anschluss des Objektivs aufweist. In diesem Fall kann der Adapter, ohne dass ein bestehendes Mikroskop umgebaut werden müsste, einfach zwischen Objektiv und Mikroskopgehäuse in den Durchgang eingesetzt werden, da sich in der Regel bei einem Mikroskop die Länge des Durchgangs zwischen der Beobachtungseinrichtung und dem objektivseitigen Anschluss des Mikroskopgehäuses verändern lässt.

Es ist sogar möglich, die Umlenkeinheit in einem entsprechend angepassten Objektiv zu integrieren. Die optischen Bauelemente können so optimal aufeinander abgestimmt werden. Auch bedarf es keines sonstigen Umbaus des Mikroskops, da lediglich ein herkömmliches Objektiv gegen ein erfindungsgemäßes auszutauschen ist.

In der Adapterbox bzw. dem erfindungsgemäßen Objektiv kann zusätzlich zur Umlenkeinheit die Lichtquelle integriert werden bzw. die Detektoreinrichtung für den Reflexionsstrahl.

Die Erfindung wird im Folgenden an mehreren Ausführungsbeispielen anhand der Zeichnung erläutert. Es zeigt:
- Figur 1: eine grob schematische Schnittdarstellung eines Mikroskops mit Auflichtanordnung und strichliert angedeutetem Adapter;
- Figur 2: eine Detailansicht (Pfeil A) der Anordnung in Figur 1 mit einer erfindungsgemäß ausgebildeten Ausführung eines Adapters und externer nicht dargestellter Lichtquelle;
- Figur 3: eine Ansicht entsprechend Figur 2 eines abgewandelten Adapters mit interner Lichtquelle;
- Figur 4: eine Schnittansicht ähnlich der Figuren 2 und 3 einer weiteren Ausführungsform des Adapters samt Objektiv unter Weglassung der übrigen Mikroskopbauteile mit Prisma als Umlenkeinheit;
- Figur 5: einen Schnitt der Anordnung gemäß Figur 4 nach Linie V-V in Figur 4;
- Figur 6: einen Schnitt ähnlich Figur 4 einer weiteren Ausführungsform des Adapters unter Weglassung eines objektfernen Teils des Adapters mit ebenem Spiegel als Umlenkeinheit;
- Figur 7: eine Ansicht ähnlich Figur 6 einer weiteren Ausführungsform des Adapters mit gekrümmten Spiegel als Umlenkeinheit;
- Figur 8: eine stark vereinfachte perspektivische Schemaansicht einer Umlenkeinrichtung aus konzentrisch angeordneten ringartig zusammenhängenden Umlenkelementen samt durch eine einzige Linse symbolisiertem Linsensystem und Objektträger mit Objekt und eingezeichnetem Strahlengang;
- Figur 9: eine Ansicht ähnlich Figur 6 mit prismatischem Umlenkelement und angekoppeltem Lichtleiter;
- Figur 10: eine Ansicht ähnlich Figur 9 mit von einem gekrümmtem Abschnitt des Lichtleiters gebildetem Umlenkelement;
- Figur 11: eine Schnittansicht mit im Objektiv integrierter Umlenkeinheit in Form eines Prismenstabs;
- Figur 12: eine Anordnung ähnlich Figur 11 mit im Objektiv integrierter Umlenkeinheit in Form eines Doppelprismas;
- Figur 13: eine Ansicht ähnlich Figur 11 mit an den Prismenstab angekoppeltem Lichtleiter und
- Figur 14: eine Anordnung ähnlich Figur 13 mit gekrümmtem Lichtleiterabschnitt als Umlenkeinheit.

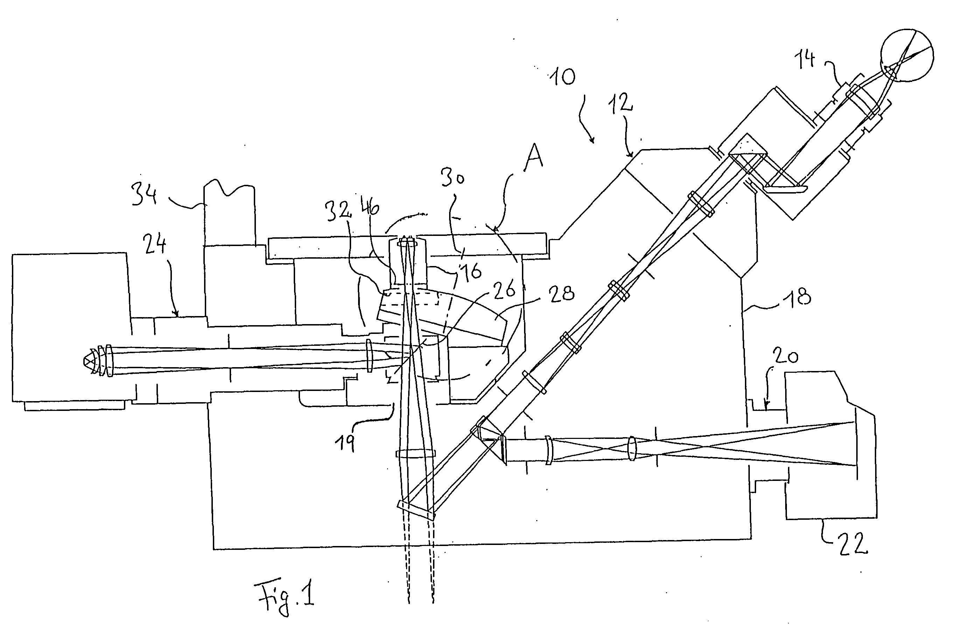

Die schematische Schnittzeichnung gemäß Figur 1 zeigt ein herkömmliches Mikroskop in invertierter Anordnung (Carl Zeiss Axiovert 100, 135, 135M, Carl Zeiss Jena). Von dem allgemein mit 10 bezeichneten Mikroskop sind die Hauptbestandteile erkennbar, nämlich ein visuelles Beobachtungsteil 12 mit Okular 14 an einem Ende des Strahlengangs und Objektiv 16 am anderen Ende und einer Vielzahl dazwischen geschalteter optischer Komponenten innerhalb eines Durchgangs 19 eines Mikroskopgehäuses 18.
In den Strahlengang einkoppelbar ist der Strahlengang eines photographischen Beobachtungsteils mit im Umriss angedeuteter Kamera 22.

In den visuellen Strahlengang ist ferner der Strahlengang eines Beleuchtungsteils 24 einkoppelbar (über einen teildurchlässigen Spiegel 26 unterhalb eines das Objektiv 16 tragenden Objektivrevolverkopfes 28 mit Revolverdrehachse 30).

Bei dem herkömmlichen Mikroskop 10 ist eine in Figur 1 strichliert angedeutete Adapteraufnahme 32 vorgesehen, die der Aufnahme von Adaptern (DIC-Slider), insbesondere eines Wollaston-Prismas zur Beobachtung von Objekten im differentiellen Interferenzkontrast, dient.

An das Objektiv 16 schließt sich in Figur 1 nach oben hin ein in Figur 1 weggelassener Objektträger für das zu mikroskopierende Objekt an. Dieses wird in der dargestellten Anordnung durch das Beleuchtungsteil von Seiten des Beobachters her beleuchtet (Auflichtanordnung). Wird eine Durchleuchtung des Objekts gewünscht, so kann ein in Figur 1 nicht dargestelltes Beleuchtungsteil für eine entsprechende Beleuchtung der Probe (in Figur 1 von oben her) an einem in Figur 1 abgebrochen dargestellten nach oben vom Mikroskop 10 abstehenden Träger 34 angeordnet sein.

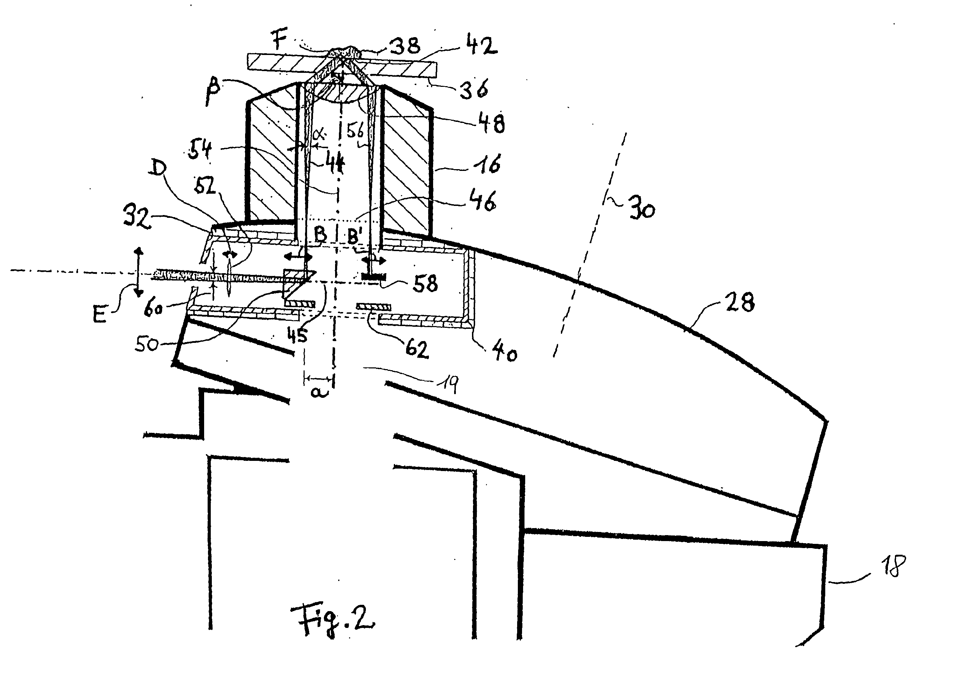

In Figur 2 ist der in Figur 1 durch die Kreisfläche A angedeutete Bereich des Revolverkopfs 28 vergrößert dargestellt samt Objektträger 36 und Objekt 38 auf dessen Oberseite (vom Objektiv 16 abgewandte Seite des von einem Glasplättchen gebildeten Objektträgers 36).

In die Aufnahme 32 ist ein erfindungsgemäßer Adapter 40 an Stelle eines herkömmlichen Adapters eingeschoben. Dieser Adapter 40 ist also ohne weiteren Umbau des bekannten Mikroskops 10 einsetzbar. Er dient der Beleuchtung des Objekts 38 gemäß dem an sich bekannten Prinzip der TIR (Total Internal Reflection) -Mikroskopie.

Bei dieser Mikroskopiertechnik wird an einer zwischen Objektträger 36 und Objekt 38 gebildeten Grenzfläche 42 von der Objektträgerseite her kommendes Licht totalreflektiert (Brechungsindex des Objekts kleiner als der Brechungsindex des Objektträgers). Vom Totalreflexionpunkt aus erstreckt sich ein sogenanntes evaneszentes Beleuchtungsfeld in das Objekt hinein, welches exponentionell mit dem Abstand von der Grenzfläche abfällt. Man erhält so eine in axialer Richtung lokal sehr scharf begrenzte Art der Beleuchtung. Um den Totalrefelxionswinkel zu erhalten wird ein Objektiv mit genügend hoher numerischer Apertur NA eingesetzt. Beispielsweise muss bei einer Glas-Wasser-Grenzfläche ein Objektiv mit hoher numerischer Apertur (NA > 1,33) eingesetzt werden, um den Totalreflexionswinkel zu erhalten.

Die Eindringtiefe dieses Feldes hängt hierbei vom jeweiligen Reflexionswinkel β ab (der der Totalreflexionsbedinung weiterhin genügt). Dementsprechend lässt sich durch Veränderung des Reflexionswinkels β auch die Beleuchtungstiefe variieren.

Erfindungsgemäß wird ein im Querschnitt stark begrenzter Beleuchtungsstrahl 44 verwendet. Die Begrenzung ist derart, dass er in der hinteren Brennebene 46 des Objektivs 16 im Wesentlichen einen Punkt bildet. Hierbei ist diejenige Brennebene gemeint, die dem vom Beleuchtungsstrahl 44 durchstrahlten Linsensystem des Objektivs 16 (in Figur 2 durch eine einzige Frontlinse 48 angedeutet) entspricht. Es könnten daher hinter der Einkoppelstelle (Prisma 50) des Beleuchtungsstrahls 44 je nach Bauart des Objektivs 1 6 durchaus noch weitere Linsen oder Linsensysteme des Objektivs 16 angeordnet sein (in Richtung zum Okular).

Bei Verwendung eines feinen Laserstrahls als Beleuchtungsstrahl 44 könnte dieser ohne Einsatz von Fokussierungslinsen durch das frontseitige Linsensystem (symbolisiert durch die Frontlinse 48) geschickt werden, wenn auch eine schwache Divergenz des aus der Frontlinse austretenden Strahls unvermeidlich ist, da die vor der Frontlinse noch parallelen Teilstrahlen anschließend auf den Brennpunkt F strahlenförmig zulaufen. Dementsprechend unterscheiden sich die Reflexionswinkel dieser Teilstrahlen voneinander geringfügig. Dies mag in manchen Fällen in Kauf genommen werden können.

Theoretisch absolute Parallelität der Teilstrahlen nach Durchgang durch die Frontlinse 48 des Objektivs erhält man dann, wenn der Beleuchtungsstrahl mit Hilfe entsprechender optischer Elemente (in Figur 2 durch eine Linse 52 angedeutet) in die hintere (okularseitige) Brennebene 46 fokussiert wird. Es ergeben sich dann nach Durchgang durch die Frontlinse 48 zwangsläufig parallele Teilstrahlen des Beleuchtungsstrahls 44 mit einem gemeinsamen Reflexionswinkel β entsprechend dem Abstand a des Teilstrahls 44 von der optischen Achse 54 des Objektivs 16. Der Grad der Aufweitung des Beleuchtungsstrahls 44 nach Durchgang durch die Frontlinse 48 ist durch den Divergenzwinkel α des in der hintere Brennebene 46 fokussierten Beleuchtungsstrahls 44 festgelegt.

Mit Hilfe des bereits erwähnten Prismas 50 wird der von einer nicht dargestellen Beleuchtungsquelle (in Figur 2 links vom Revolverkopf 28) herkommende Beleuchtungsstrahl rechtwinklig umgelenkt, so dass er parallel zur optischen Achse 54 und mit Abstand a zu dieser verläuft. Hierbei ist der in dem Durchgang 19 befindliche Querschnitt des Prismas 50 wesentlich kleiner als der Gesamtquerschnitt des Durchgangs 19. Aus diesem Grunde ist es nicht erforderlich, zur Einkopplung des Beleuchtungsstrahls einen Strahlteiler, z. B. einen dichroitischen Spiegel, zu verwenden, der eine Transmission des vom Objekt herkommenden Beobachtungslichtes zulässt, da durch das Prisma 50 lediglich ein kleiner Teil des Beobachtungsfeldes des Mikroskops verdeckt wird. Der Abstand a kann erfindungsgemäß in besonders einfacher Weise dadurch variiert werden, dass das Prisma 50 entweder in Richtung parallel zur optischen Achse 54, oder wie dargestellt in radialer Richtung (Doppelpfeil B) verschoben wird. Mit dem Abstand a ändert sich der Reflexionswinkel β des Beleuchtungsstrahls 44 und damit nach Überschreiten des Totalreflexionswinkels die Eindringtiefe in das Objekt. Damit auch nach der Verschiebung des Prismas 50 der Fokus des Beleuchtungsstrahls 44 in der Brennebene 46 liegt, müssen die im Strahlengang vorgesehenen optischen Bauelemente (symbolisiert durch die Linse 52) dementsprechend in ihrer Lage angepasst werden. Falls wie in Figur 2 der Beleuchtungsstrahl rechtwinklig umgelenkt wird, ist es besonders vorteilhaft, die Umlenkeinheit und die der Fokussierung dienenden optischen Elemente auf einem gemeinsamen Träger zu montieren, da dann nur dieser Träger in radialer Richtung verlagerbar sein muss.

In der in Figur 2 dargestellten Anordnung mit zur optischen Achse 54 senkrechter Grenzfläche 42 zwischen Objektträger 36 und Objekt 38 tritt der Beleuchtungsstrahl nach Reflexion an der Grenzfläche 42 (nunmehr Reflexionsstrahl 56 genannt) wieder durch die Frontlinse 48 in das Objektiv 16 ein (symmetrisch zum Beleuchtungsstrahl 44). Damit der Reflexionsstrahl 56 nicht die mikroskopische Beobachtung des Objekts 38 stört, wird dieser in der Ausführungsform gemäß Figur 2 durch einen Absorber 58 absorbiert, der hier an einer dem Ort des Prismas 50 entsprechenden Stelle auf der anderen Seite der optischen Achse 54 angeordnet ist. Um möglichst wenig die mikroskopische Beobachtung zu stören, kann der Absorber 58 jeweils möglichst weit radial nach außen gezogen werden, was durch den Doppelpfeil B' angedeutet ist.

Zu erwähnen ist noch die Aperturblende 60 vor der Linse 52, die den Strahlquerschnitt des Beleuchtungsstrahls 44 begrenzt und damit über den Divergenzwinkel α den Grad der Aufweitung des Beleuchtungsstrahls 44 nach Durchgang durch die Frontlinse 48 festlegt. Eine weitere Möglichkeit, den Divergenzwinkel α zu verändern, besteht darin, die Brennweite der Linse 52 zu variieren, wobei dann die Position der Linse 52 (siehe Doppelpfeil D) und ggf. die gemeinsame Position von Linse 52 und Prisma 50 in axialer Richtung (siehe den Doppelpfeil E) so nachgeführt werden müssen, dass der Beleuchtungsstrahl weiterhin in der hinteren Brennebene 46 fokussiert ist.

Im Bedarfsfall kann der Adapter 40 wieder aus der Aufnahme 32 herausgezogen und ggf. durch einen herkömmlichen Adapter ersetzt werden. Ferner kann der Adapter auch ohne Weiteres in Verbindung mit beliebigen anderen Objektiven des Revolverkopfes 28 eingesetzt werden, da üblicherweise jedem Objektiv eine Aufnahme 32 zugeordnet ist.

Zum optischen Aufbau sei noch ergänzt, dass in den Durchgang 19 zwischen der Einkoppelstelle des Beleuchtungsstrahls (Prisma 50) und der Beobachtungseinrichtung eine zusätzliche Aperturblende 62 (in Figur 2 unterhalb des Prismas 50 angedeutet) eingesetzt werden kann. Diese blendet das Prisma 50 aus dem Beobachtungsstrahlengang aus und verhindert dadurch eventuell störende asymmetrische Beugungsbilder (Bildverzerrungen) der Objekte durch das in den Beleuchtungsstrahlengang eingebrachte Prisma 50. Die etwas reduzierte numerische Apertur und Auflösung kann in Kauf genommen werden.

Eine weitere Variation der Art der Beleuchtung des Objekts 38 kann dadurch erzielt werden, dass man das Prisma 50 samt den vorgeschalteten optischen Bauelementen (Linse 52) parallel zur optischen Achse 54 verlagert. Sofern man dabei aus dem Fokus in der hinteren Brennebene 46 gelangt, ergibt sich eine gewisse Divergenz des auf die Grenzfläche 42 auftreffenden Strahls sowie eine Änderung des Grads der Aufweitung.

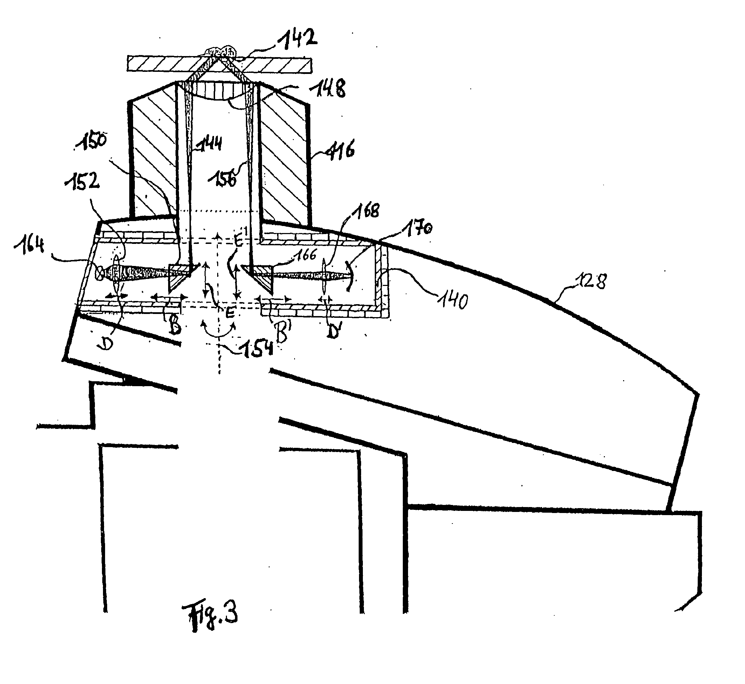

Figur 3 zeigt eine weitere mit 140 bezeichnete Ausführungsform des Adapters 40 gemäß Figur 2. Dementsprechend sind auch die übrigen Bauteile, sofern sie ihre Entsprechung in Bauteilen des Adapters 40 haben, mit denselben Bezugsziffern, jeweils vermehrt um die Zahl 100, versehen.

Im Gegensatz zum Adapter 40 mit externer Lichtquelle ist beim Adapter 140 die Lichtquelle 164 in den Adapter 140 integriert. Es schließt sich die Linse 152 sowie das Prisma 150 an. Nach Durchgang durch die Frontlinse 148 des Objektivs 116 und Totalreflexion an der Grenzfläche 142 wird der Beleuchtungsstrahl 144 bzw. der Reflexionsstrahl 156 durch ein weiteres Prisma 166 um 90° abgelenkt (diametral zum Prisma 150 samt Lichtquelle 164) und nach Durchgang durch eine Linse 168 in einem Detektor 170 aufgefangen. Durch den Detektor 170 läßt sich zum einen die optische Anordnung gezielt justieren, insbesondere der Totalreflexionswinkel in Abhängigkeit von der Position des Prismas 150 sowie ein gewünschter Bereich nach Überschreitung des Totalreflexionswinkels. Andererseits lassen sich unter Umständen lokale Brechungsindex-Änderungen, Absorptionsvorgänge oder dgl. im Bereich der Grenzfläche 142 erfassen. Dabei ist auch eine Wellenlängenvariation des Lichts der Lichtquelle 164 denkbar.

Mit den Doppelpfeilen B und B' ist wiederum die radiale Justierbarkeit der Prismen 150, 166 andedeutet, mit den Doppelpfeilen E und E' die Beweglichkeit der Prismen 150 bzw. 166 samt Lichtquelle 164 und Linse 152 bzw. Detektor 170 und vorgeschalteter Linse 168 parallel zur optischen Achse 154, mit D, D' die Justierbeweglichkeit der Linsen 152, 168.

Prinzipell ist es auch denkbar, den Adapter 140 derart auszubilden, dass er um die optische Achse 154 wahlweise rotiert werden kann. Dies bietet den Vorteil, dass bei Objekten mit anisotropen optischen Eigenschaften die Einstrahlrichtung des Beobachtungsstrahls 144 wahlweise variiert werden kann. Auch kann man wahlweise durch Rotation während der Messung eine gleichmäßige Ausleuchtung des Objekts erhalten.

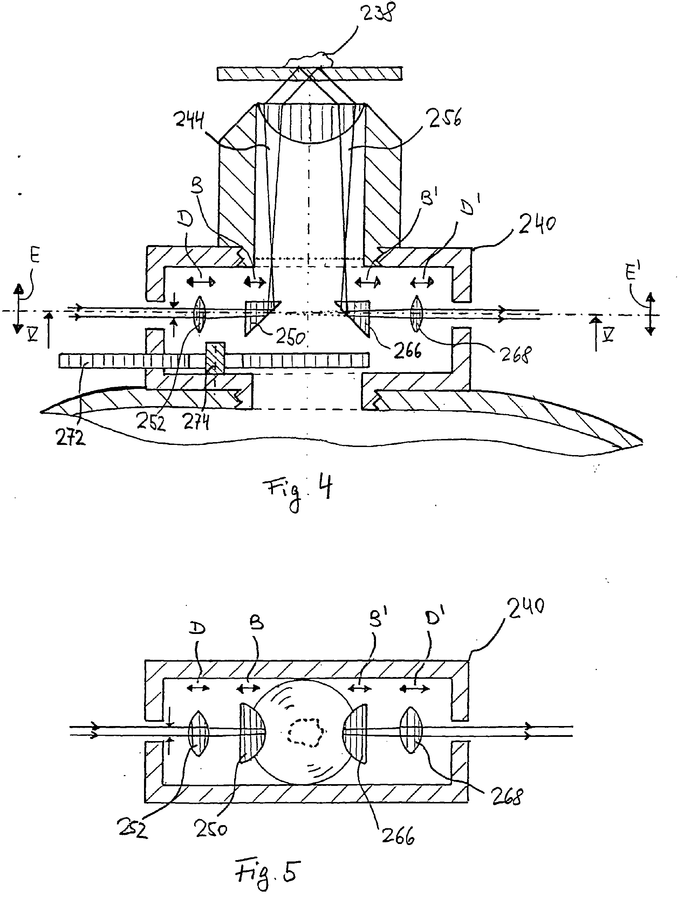

Figuren 4 und 5 zeigen in Seitenansicht bzw. Schnittansicht eine weitere Ausführungsform des erfindungsgemäßen Adapters, der nunmehr mit 240 bezeichnet ist. Seine Bauelemente, die ihrer Funktion nach solchen der Figur 3 entsprechen, sind mit denselben Bezugsziffern, jeweils vermehrt um die Zahl 100, versehen.

Auch hier sind für die Einkopplung des Beleuchtungsstrahls 244 bzw. zur Auskopplung des Reflexionsstrahls 256 Prismen 250, 266 vorgesehen mit vorgeschalteten Linsen 252, 268. Im Unterschied zur Ausführungsform gemäß Figur 3 wird der Reflexionsstrahl 256 aus dem Adapter 240 herausgeführt und einer nicht dargestellten Detektionseinrichtung zugeführt. Auch die nicht dargestellte Lichtquelle befindet sich (in Entsprechung zu Figur 2) außerhalb des Adapters 240. Die Justiermöglichkeiten sind die gleichen wie bei der Ausführungsform gemäß Figur 3; was durch die entsprechenden Doppelpfeile D, D', B, B' und E, E' angedeutet ist.

Der Adapter 240 ist zwischen dem Objektiv 216 und dem Revolverkopf 228 angeordnet. Er weist an seiner dem Objektiv zugewandten Seite einen Anschluss 290 auf, der dem Objektivanschluss 292 des Revolverkopfes 228, in den normalerweise das Objektiv 216 eingepasst wird, entspricht. Auf seiner dem Revolverkopf 228 zugewandten Seite weist der Adapter 240 einen Anschluss 286 auf, der dem okularseitigen Anschluss 288 des Objektivs 216, der normalerweise in den Objektivanschluss 292 des Revolverkopfes 228 eingepasst wird, entspricht. Auf diese Weise kann der Adapter 240 in einfacher Weise in ein bestehendes Mikroskop integriert werden, ohne dass dieses umgebaut werden muss.

Die beiden Prismen 250, 266 weisen abgerundete Reflexionsflächen auf, um die mikroskopische Beobachtung möglichst wenig zu beeinträchtigen (siehe Figur 5). Desweiteren ist in dem Adapter 240 auf der vom Objekt 238 abgewandten Seite der Prismen 250, 266 ein Filterrad 272 mit Drehachse 274 im Beobachtungsstrahlengang angeordnet. Es lassen sich damit beispielsweise diejenigen Anteile des Beleuchtungsstrahls 244, die nicht als Reflexionsstrahl 256 wieder aus dem Adapter 240 ausgekoppelt werden (insbesondere diffus gestreute Anteile), aus dem Beobachtungsstrahlengang herausfiltern. Dies ist insbesondere bei Fluoreszenzmessungen von Vorteil.

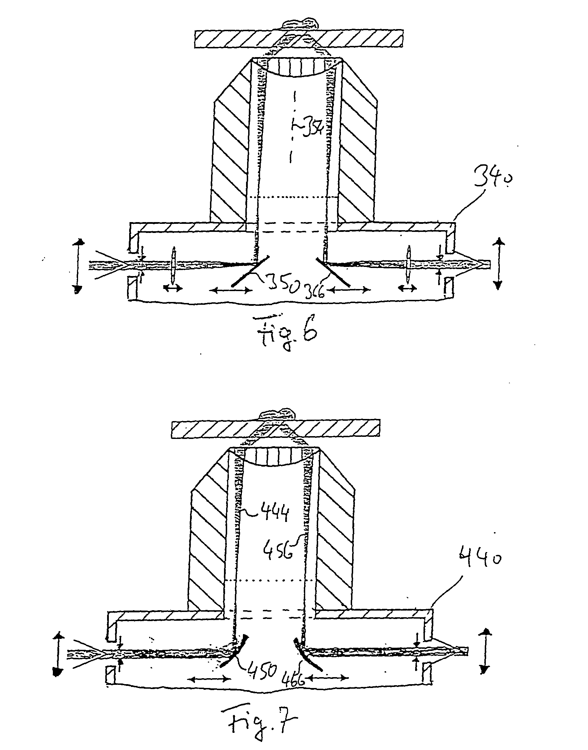

Die in Figur 6 dargestellte Ausführungsform des erfindungsgemäßen Adapters ist mit 340 bezeichnet. Er unterscheidet sich von dem gemäß den Figuren 4 und 5 lediglich darin, dass die Prismen 250, 266 ersetzt sind durch ebene Spiegel 350, 366. Durch Verlagerung des Spiegels 350 in Richtung senkrecht zur optischen Achse 354 (unter Beibehaltung der Raumorientierung) läßt sich der Totalreflexionswinkel in gleicher Weise wie beim Einsatz eines Prismas verändern

Bei der mit 440 bezeichneten Ausführungsform des Adapters gemäß Figur 7 sind die beiden ebenen Spiegel 350, 366 gemäß Figur 6 ersetzt durch gekrümmte Spiegel, insbesondere Hohlspiegel 450, 466. Die Einkopplung und Fokussierung des Beleuchtungsstrahls 440 kann dann unter Umständen ohne weitere optische Elemente wie eine vorgeschaltete Linse entsprechend den vorstehend beschriebenen Ausführungsformen erfolgen. Hierzu symmetrisch erfolgt die Strahlführung des Reflexionsstrahls 456 durch den Spiegel 466.

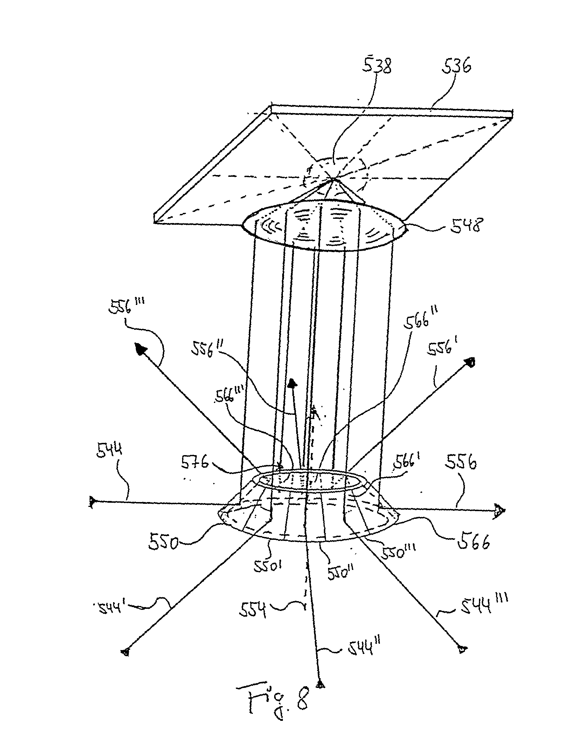

Figur 8 zeigt in einer stark vereinfachten perspektivischen Schemaansicht eine Umlenkeinrichtung 576, die zur Einkopplung mehrerer Beleuchtungsstrahlen 544, 544', 544'', 544''' und zur Auskopplung der entsprechenden Reflexionsstrahlen 556, 556', 556'', 556''' verwendet wird.

Die Umlenkeinrichtung 576 besteht dabei aus konzentrisch angeordneten, ringartig zusammenhängenden Umlenkelementen, die in Figur 8 als trapezförmige Spiegel 550, 550', 550'', 550''', 566, 566', 566'', 566''' dargestellt sind. Hierbei wird jeweils ein Beleuchtungsstrahl, z. B. der mit dem Bezugszeichen 544 versehene, an dem jeweiligen Umlenkelement, z. B. 550, reflektiert, so dass er nach der Reflexion parallel zu optischen Achse 554 verläuft und durch das Objektiv 548 auf den Objektträger 536 mit dem Objekt 538 abgebildet wird. Der an der Grenzfläche zwischen Objektträger 536 und Objekt 538 totalreflektierte Beleuchtungsstrahl, z. B. 544, fällt als Reflexionsstrahl, z. B. 556, nach erneutem Durchgang durch das Objektiv 548 parallel zur optischen Achse 554 auf das Umlenkelement, z. B. 566, wo er erneut reflektiert wird, so dass er aus dem Strahlengang des Mikroskops ausgekoppelt wird. Durch die in Figur 8 gezeigte Anordnung ist es möglich, das Objekt 538 gleichzeitig aus mehreren Richtungen zu beleuchten, wobei jeder der Beleuchtungsstrahlen 544 - 544''' in gleicher Weise der Totalreflexionsbedingung genügt.

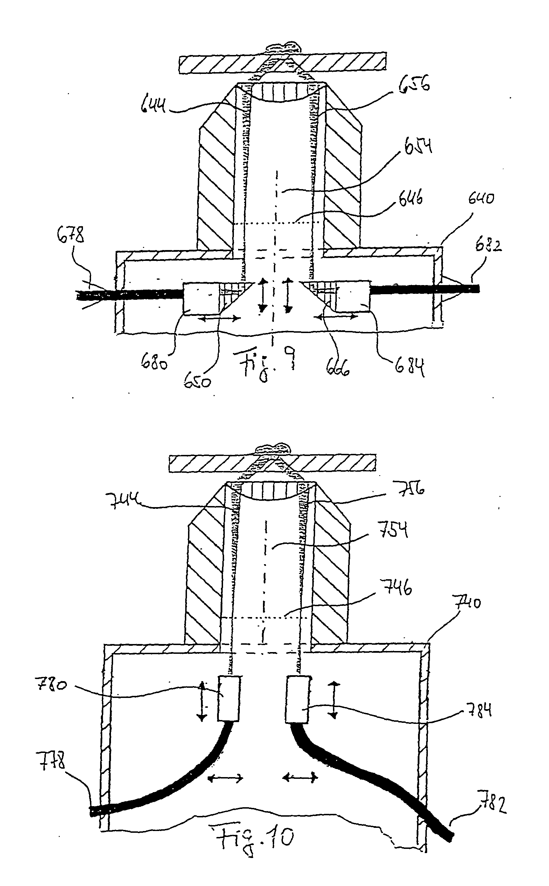

In den Figuren 9 und 10 sind weitere Ausführungen des bereits in den Figuren 2-7 gezeigten Adapters als Seitenansicht dargestellt. Die Bauelemente dieser mit den Bezugszahlen 640 und 740 bezeichneten Adapter, deren Funktion solchen des in Figur 4 gezeigten Adapters entsprechen, sind mit denselben Bezugsziffern, jedoch jeweils erhöht um die Zahl 400 bzw. 500 versehen.

Bei den in den Figuren 9 und 10 dargestellten Ausführungsformen des Adapters 640 und 740 wird das Beleuchtungslicht über einen Lichtleiter 678 bzw. 778, beispielsweise eine Glasfaser, in den Adapter 640 bzw. 740 eingeführt. An den Lichtleiter 678 bzw. 778 schließt sich eine, z. B. aus Mikrolinsen aufgebaute, Adapteroptik 680 bzw. 780 an, um den aus dem Lichtleiter 678 bzw. 778 austretenden Beleuchtungsstrahl 644 bzw. 744 in der hinteren Brennebene 646 bzw. 746 zu fokussieren.

Bei der in Figur 9 dargestellten Ausführung wird der Lichtleiter 678 senkrecht zur optischen Achse 654 in den Adapter 640 eingeführt, so dass er über eine Umlenkeinheit, die in Figur 9 als Prisma 650 dargestellt ist, in eine Richtung parallel zur optischen Achse 654 umgelenkt werden muss. Demgegenüber ist der Lichtleiter 778 bei dem in Figur 10 dargestellten Ausführungsbeispiel gekrümmt, so dass der die Adapteroptik 780 verlassende fokussierte- Beleuchtungsstrahl 744 bereits parallel zur optischen Achse 754 ist.

In beiden Ausführungsbeispielen kann eine Auskopplung des Reflexionsstrahls 656 bzw. 756 mit Hilfe von optischen Elementen, die den zur Einkopplung verwendeten entsprechen, erfolgen. In Figur 9 ist dies durch das Prisma 666 und den Lichtleiter 682, der über die Adapteroptik 684 mit dem Prisma 666 verbunden ist, realisiert. In Figur 10 erfolgt dies durch den Lichtleiter 782 und die an seinem Ende angebrachte Adapteroptik 784, die bezüglich der optischen Achse 754 symmetrisch zu der zum Einkoppeln des Beleuchtungsstrahls 744 verwendeten Adapteroptik 780 angebracht ist.

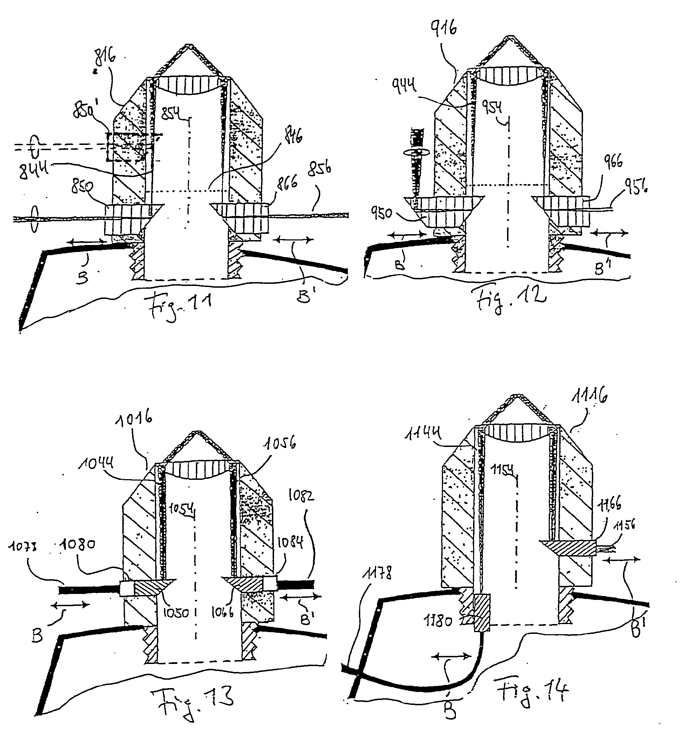

Die Figuren 11-14 zeigen Ausführungen der vorliegenden Erfindung, bei denen die Umlenkeinheiten, die zum Einkoppeln des Beleuchungsstrahls bzw. zum Auskoppeln des Reflexionsstrahls dienen, in einem speziellen Objektiv 816, 916, 1016, 1116 intregiert sind. Bauelemente, die ihrer Funktion nach solchen in den vorangehenden Figuren gezeigten entsprechen, sind in den Figuren 11 -14 mit denselben Bezugsziffern, jedoch jeweils um die Zahl 100 erhöht, bezeichnet. Gegenüber den Ausführungen, bei denen die Umlenkeinheiten in einem Adapter integriert sind, bieten die in den Figuren 11 - 14 dargestellten Ausführungen den Vorteil, dass die für die Umlenkeinheiten nötigen optischen Bauteile an das Linsensystem des Objektivs 816, 916, 1016, 1116 angepasst werden können, wodurch insgesamt die Qualität der optischen Abbildung optimiert werden kann. Darüber hinaus können solche speziellen Objektive auch für Mikroskope verwendet werden, die nicht über eine Adapteraufnahme wie in Figur 2 dargestellt verfügen.

In Figur 11 wird der Beleuchtungsstrahl 844 über ein Stabprisma 850 in den Strahlengang des Mikroskops eingekoppelt. Ebenso wird der Reflexionsstrahl 856 über ein weiteres Stabprisma 866 aus dem Objektiv 816 herausgeführt. Hierbei sind beide Prismen 850, 866 im Bereich des Objektivs so angeordnet, dass sie zur Einstellung des Reflexionswinkels im Strahlengang des Mikroskops in radialer Richtung verschiebbar sind (gezeigt durch die Doppelpfeile B, B' in Figur 11). Eine alternative Anordnung des Stabprismas 850 ist in Figur 11 strichliert angedeutet. Bei dieser Anordnung befindet sich das Stabprisma 850' zum Einkoppeln des Beleuchtungsstrahls 844 zwischen der durchstrahlten Frontlinse des Objektivs und seiner okularseitigen Brennebene 846. Der Beleuchtungsstrahl 844 wird in diesem Fall virtuell auf die okularseitige Brennebene 846 des durchstrahlten Linsensystems fokussiert. Diese Anordnung erlaubt eine besonders Platz sparende Bauweise eines speziellen Objektivs mit integrierter Umlenkeinheit.

Bei dem in Figur 12 gezeigten Ausführungsbeispiel wird im Unterschied zu Figur 11 zum Einkoppeln des Beleuchtungsstrahls 944 ein Doppelprisma 950 verwendet, durch das der Beleuchtungsstrahl 944 um 180° umgelenkt werden kann.

Bei den in Figur 13 und Figur 14 dargestellten Ausführungsbeispielen werden Lichtleiter 1078, 1082, 1178, verwendet, um das von einer nicht dargestellen Lichtquelle kommende Beleuchtungslicht im Bereich des Objektivs in den Strahlengang des Mikroskops einzukoppeln bzw. auszukoppeln. Bei der in Figur 13 dargestellten Anordnung, die der in Figur 9 ähnlich ist, wird eine an dem Lichtleiter 1078 angebrachte Adapteroptik 1080 und ein an die Adapteroptik 1080 sich anschließendes Prisma 1050 zur Einkopplung des Beleuchtungsstrahls 1044 verwendet. Die Auskopplung des Reflexionsstrahls 1056 erfolgt durch ein bezüglich der optischen Achse 1054 symmetrisch angeordnetes Prisma 1066 und eine sich daran anschließende Adapteroptik 1084, an die ein Lichtleiter 1082 angekoppelt ist. Im Unterschied wird dazu in Figur 14 eine Ausführung gezeigt, bei der ein gekrümmter Lichtleiter 1178 mit einer Adapteroptik 1180, die parallel zur optischen Achse 1154 ausgerichtet ist, verbunden wird, um den Beleuchtungsstrahl 1144 parallel zur optischen Achse in den Strahlengang des Mikroskops einzukoppeln.

In den Figuren 1 - 14 werden verschiedene Ausführungsformen eines Mikroskops beschrieben, welches insbesondere zur TIR-Mikroskopie verwendet werden kann. Dabei wird das Mikroskop in einer Auflichtanordnung betrieben, bei der das zur Beleuchtung des Objekts dienende Licht durch wenigstens einen Teil des Objektivs auf das zu beobachtende Objekt fällt. Hierbei wird der Beleuchtungsstrahl durch eine optische Einrichtung in den Durchgang zwischen dem Okular und dem Objektiv des Mikroskops eingekoppelt, deren in dem Durchgang liegender Querschnitt klein gegenüber dem Querschnitt des Durchgangs ist. Dadurch wird erreicht, dass auf die Verwendung von Strahlteilerelementen, z. B. dichroitische Spiegel, zur Einkopplung des Beleuchtungslichts verzichtet werden kann. Es kann ein Spezialobjektiv mit integrierten optischen Elementen zur Bereitstellung des Beleuchtungsstrahls bzw. zum Auffangen oder Auskoppeln des Reflexionsstrahls verwendet werden. Alternativ können die genannten optischen Elemente auch in einen Adapter integriert werden, der in den Strahlengang eines bestehenden Mikroskops einsetzbar ist.

### Bezugszeichenliste

- A:: Kreis (Vergrößerungsausschnitt für Figur 2)
- F:: Brennpunkt des Objektivs
- α:: Divergenzwinkel des Beleuchtungsstrahls
- β:: Reflexionswinkel des Beleuchtungsstrahl an der Grenzfläche zwischen Objektträger und Objekt
- a:: Abstand zwischen optischer Achse und Beleuchtungsstrahl
- B, B':: Verschiebung der Umlenkeinheit in radialer Richtung
- D, D':: Verschiebung der Fokussierungslinsen in radialer Richtung
- E, E':: Verschiebung der Umlenkeinheit in axialer Richtung

- 10:: Mikroskop
- 12:: Visuelles Beobachtungssteil
- 14:: Okular
- 16:: Objektiv
- 18:: Mikroskopgehäuse
- 19:: Durchgang
- 20:: Photographisches Beobachtungsteil
- 22:: Kamera
- 24:: Beleuchtungsteil
- 26:: Teildurchlässiger Spiegel
- 28:: Objektivrevolverkopf
- 30:: Revolverdrehachse
- 32:: Adapteraufnahme
- 34:: Träger (für Durchlichtbeleuchtung)
- 36:: Objektträger
- 38:: Objekt
- 40:: Adapter
- 42:: Grenzfläche Objektträger - Objekt
- 44:: Beleuchtungsstrahl
- 45:: Eintrittsebene des Beleuchtungsstrahls
- 46:: Hintere Brennebene des Objektivs
- 48:: Frontlinse des Objektivs
- 50:: Umlenkeinheit zum Einkoppeln des Beleuchtungsstrahls
- 52:: Linse zum Fokussieren des Beleuchtungsstrahls
- 54:: Optische Achse
- 56:: Reflexionsstrahl
- 58:: Absorber
- 60:: Aperturblende im Beleuchtungsstrahl
- 62:: Zusätzliche Apterturblende am Objektiv

- 164:: Lichtquelle
- 166:: Umlenkeinheit zum Auskoppeln des Reflexionsstrahls
- 168:: Linse zum Fokussieren des Reflexionsstrahls
- 170:: Detektor

- 272:: Filterrad
- 274:: Drehachse des Filterrads
- 286:: Okularseitiger Anschluss des Adapters
- 288:: Okularseitiger Anschluss des Objektivs
- 290:: Objektivseitiger Anschluss des Adapters
- 292:: Objektivseitiger Anschluss des Mikroskopgehäuses

- 350:: Ebener Spiegel zum Einkoppeln des Beleuchtungsstrahls
- 366:: Ebener Spiegel zum Auskoppeln des Reflexionsstrahls

- 450:: Gekrümmter Spiegel zum Einkoppeln und Fokussieren des Beleuchtungsstrahls
- 466:: Gekrümmter Spiegel zum Auskoppeln und Fokussieren des Reflexionsstrahls

- 576:: Umlenkeinrichtung umfassend mehrere Umlenkeinheiten

- 678:: Lichtleiter zur Einkopplung des Beleuchtungsstrahls
- 680:: Adapteroptik zur Fokussierung des Beleuchtungsstrahls
- 682:: Lichtleiter zur Auskopplung des Reflexionsstrahls
- 684:: Adapteroptik zur Auskopplung des Reflexionsstrahls

## Patentansprüche

1. Mikroskop (10) umfassend
- ein Mikroskopgehäuse (18),
- ein Objektiv (16) aus mindestens einem jeweils mindestens eine Linse (48) umfassenden Linsensystem an einem Ende eines Durchgangs (19) des Mikroskopgehäuses (18),
- wenigstens eine Beobachtungseinrichtung (14, 22), insbesondere ein Okular, an einem anderen Ende des Durchgangs (19),
- eine Beleuchtungseinrichtung (24), deren Beleuchtungslicht von einer den Durchgang (19) senkrecht schneidenden Eintrittsebene (45) ausgehend wenigstens einen Beleuchtungsstrahl (44) bildet, der durch das Linsensystem verläuft und in einem vorgegebenen Winkel (β) auf einen Objektträger (36) auftrifft,
**dadurch gekennzeichnet,**
**dass** der von der Eintrittsebene (45) ausgehende wenigstens eine Beleuchtungsstrahl (44) von einer optischen Einrichtung bereitgestellt wird, deren im Bereich des Durchgangs (19) liegender Querschnitt wesentlich kleiner als der Querschnitt des Durchgangs (19) ist.

2. Mikroskop (10) nach Anspruch 1,
**dadurch gekennzeichnet,**
**dass** der im Bereich des Durchgangs (19) liegende Querschnitt der den wenigstens einen von der Eintrittsebene (45) ausgehenden Beleuchtungsstrahl (44) bereitstellenden optischen Einrichtung höchstens halb so groß wie der Querschnitt des Durchgangs (19) ist.

3. Mikroskop (10) nach Anspruch 1,
**dadurch gekennzeichnet,**
**dass** der im Bereich des Durchgangs (19) liegende Querschnitt der den wenigstens einen von der Eintrittsebene (45) ausgehenden Beleuchtungsstrahl (44) bereitstellenden optischen Einrichtung höchstens 10% des Querschnitts des Durchgangs (19) ist.

4. Mikroskop (10) nach Anspruch 1,
**dadurch gekennzeichnet,**
**dass** der im Bereich des Durchgangs (19) liegende Querschnitt der den wenigstens einen von der Eintrittsebene (45) ausgehenden Beleuchtungsstrahl (44) bereitstellenden optischen Einrichtung höchstens 1% des Querschnitts des Durchgangs (19) ist.

5. Mikroskop (10) nach Anspruch 1, 2, 3 oder 4,
**dadurch gekennzeichnet,**
**dass** die den wenigstens einen von der Eintrittsebene (45) ausgehenden Beleuchtungsstrahl (44) bereitstellende optische Einrichtung außerhalb der optischen Achse (54) angeordnet ist.

6. Mikroskop (10) nach Anspruch 1, 2, 3 oder 4,
**dadurch gekennzeichnet,**
**dass** die den wenigstens einen von der Eintrittsebene (45) ausgehenden Beleuchtungsstrahl (44) bereitstellende optische Einrichtung auf der optischen Achse (54) angeordnet ist.

7. Mikroskop (10) nach einem der vorherigen Ansprüche,
**dadurch gekennzeichnet,**
**dass** der wenigstens eine Beleuchtungsstrahl (44) in der der wenigstens einen Beobachtungseinrichtung (14, 22) zugewandten Brennebene (46) des wenigstens einen durchstrahlten Linsensystems (48) reell oder virtuell fokussiert ist.

8. Mikroskop (10) nach einem der vorherigen Ansprüche,
**dadurch gekennzeichnet,**
**dass** der wenigstens eine Beleuchtungsstrahl (44) in radialer Richtung in Bezug auf die optische Achse (54) verlagerbar ist.

9. Mikroskop (10) nach einem der vorherigen Ansprüche,
**dadurch gekennzeichnet,**
**dass** der Divergenzwinkel (α) des wenigstens einen von der Eintrittsebene (45) ausgehenden Beleuchtungsstrahls (44) veränderbar ist.

10. Mikroskop (10) nach Anspruch 9,
**dadurch gekennzeichnet,**
**dass** im Strahlengang des wenigstens einen Beleuchtungsstrahls (44) eine verstellbare Aperturblende (60) angeordnet ist.

11. Mikroskop (10) nach Anspruch 9,
**dadurch gekennzeichnet,**
**dass** die Brennweite einer den Beleuchtungsstrahl (44) in der der wenigstens einen Beobachtungseinrichtung (14, 22) zugewandten Brennebene (46) fokussierenden optischen Eichrichtung (52) veränderbar ist.

12. Mikroskop (10) nach einem der vorherigen Ansprüche,
**dadurch gekennzeichnet,**
**dass** der wenigstens eine Beleuchtungsstrahl (44) im Wesentlichen kohärent ist.

13. Mikroskop (10) nach Anspruch 12,
**dadurch gekennzeichnet,**
**dass** wenigstens zwei Beleuchtungsstrahlen (44) im Bereich eines Objekts (38) interferieren.

14. Mikroskop (10) nach einem der Ansprüche 1-11,
**dadurch gekennzeichnet,**
**dass** der wenigstens eine Beleuchtungsstrahl (44) inkohärent ist.

15. Mikroskop (10) nach einem der vorherigen Ansprüche,
**dadurch gekennzeichnet,**
**dass** der im Bereich des Objekts (38) zurückreflektierte Anteil des wenigstens einen Beleuchtungsstrahls (44), der Reflexionsstrahl (56), absorbiert wird.

16. Mikroskop (10) nach Anspruch 15,
**gekennzeichnet durch**
wenigstens einen Absorber (58) für den wenigstens einen Reflexionsstrahl (56) im Bereich des Durchgangs (19).

17. Mikroskop (10) nach einem der Ansprüche 1-14,
**dadurch gekennzeichnet,**
**dass** der im Bereich des Objekts (38) zurückreflektierte Anteil des wenigstens einen Beleuchtungsstrahls (44), der Reflexionsstrahl (56), detektiert wird.

18. Mikroskop (10) nach Anspruch 17,
**gekennzeichnet durch**
wenigstens eine Detektionseinrichtung im Bereich des Durchgangs (19).

19. Mikroskop (10) nach einem der vorherigen Ansprüche,
**gekennzeichnet durch**
wenigstens eine Lichtquelle im Bereich des Durchgangs (19).

20. Mikroskop (10) nach einem der vorherigen Ansprüche,
**gekennzeichnet durch**
wenigstens eine Umlenkeinheit (50, 66) im Bereich des Durchgangs (19).

21. Mikroskop (10) nach Anspruch 20,
**dadurch gekennzeichnet,**
**dass** der wenigstens eine Beleuchtungsstrahl (44) durch die wenigstens eine Umlenkeinheit (50) in den Durchgang (19) eingekoppelt wird.

22. Mikroskop (10) nach Anspruch 20 oder 21,
**dadurch gekennzeichnet,**
**dass** der wenigstens eine Reflexionsstrahl (56) durch die Umlenkeinheit (66) aus dem Durchgang (19) ausgekoppelt wird.

23. Mikroskop (10) nach einem der Ansprüche 20, 21 oder 22
**dadurch gekennzeichnet,**
**dass** die wenigstens eine Umlenkeinheit (50, 66) ein Prisma (150, 166) umfasst.

24. Mikroskop (10) nach Anspruch 23,
**dadurch gekennzeichnet,**
**dass** sich das Prisma (650, 666) an einen Lichtleiter (678, 682) anschließt.

25. Mikroskop (10) nach einem der Ansprüche 20, 21, oder 22,
**dadurch gekennzeichnet,**
**dass** die wenigstens eine Umlenkeinheit (50, 66) einen Spiegel (350, 366) umfasst.

26. Mikroskop (10) nach Anspruch 20, 21, 22,
**dadurch gekennzeichnet,**
**dass** die wenigstens eine Umlenkeinheit (50, 66) einen gekrümmten Spiegel (450, 466) umfasst.

27. Mikroskop (10) nach einem der Ansprüche 20, 21, oder 22,
**dadurch gekennzeichnet,**
**dass** die wenigstens eine Umlenkeinheit (50, 66) einen gekrümmten Lichtleiter (778, 782) umfasst.

28. Mikroskop (10) nach einem der Ansprüche 20 - 27,
**dadurch gekennzeichnet,**
**dass** eine Umlenkeinrichtung (576) vorgesehen ist, in die wenigstens zwei Umlenkeinheiten (50, 66) integriert sind.

29. Mikroskop (10) nach Anspruch 28,
**dadurch gekennzeichnet,**
**dass** die Umlenkeinrichtung (576) angenähert ringförmig ausgebildet und konzentrisch zur optischen Achse (54) angeordnet ist.

30. Mikroskop (10) nach einem der Ansprüche 20 - 29,
**gekennzeichnet durch**
eine Rotationseinrichtung für den Beleuchtungsstrahl (44).

31. Mikroskop (10) nach einem der Ansprüche 20 - 30,
**gekennzeichnet durch**
eine Aperturblende (62) im Durchgang (19) auf der der wenigstens einen Beobachtungseinrichtung (14, 22) zugewandten Seite der Eintrittsebene (45) zur Ausblendung der wenigstens einen Umlenkeinheit aus dem Beobachtungsstrahlengang.

32. Mikroskop (10) nach einem der Ansprüche 20-31,
**gekennzeichnet durch**
eine bezüglich der Eintrittsebene (45) der wenigstens einen Beobachtungseinrichtung (14, 22) zugewandten Seite angeordnete Filteranordnung (272).

33. Adapter (40) für ein Mikroskop nach einem der Ansprüche 1 - 32,
**dadurch gekennzeichnet, dass**
der Adapter (40) in den Durchgang (19) des Mikroskopgehäuses (18) zwischen dem Objektiv (16) und der Beobachtungseinrichtung (14, 22) einsetzbar ist, und die wenigstens eine optische Einrichtung umfasst, die den Beleuchtungsstrahl (44) bereitstellt.

34. Adapter (240) nach Anspruch 33,
**dadurch gekennzeichnet,**
**dass** der Adapter (240) zwischen das Objektiv (16) und den Objektivanschluss des Mikroskopgehäuses (18) einsetzbar ist.

35. Adapter (40) nach Anspruch 33,
**dadurch gekennzeichnet,**
**dass** der Adapter (40) in eine für andere, insbesondere zur DIC-Mikroskopie verwendete, optische Elemente vorgesehene Aufnahme (32) des Mikroskopgehäuses (18) einsetzbar ist.

36. Adapter (40) nach einem der Ansprüche 33 - 35
**dadurch gekennzeichnet,**
**dass** wenigstens eines der in den Ansprüchen 1 - 32 genannten optischen Elemente in den Adapter (40) integriert ist.

37. Objektiv (816, 916, 1016, 1116) für ein Mikroskop (10) nach einem der Ansprüche 1 - 32,
**dadurch gekennzeichnet,**
**dass** das Objektiv (816, 916, 1016, 1116) die wenigstens eine optische Einrichtung umfasst, die den Beleuchtungsstrahl (44) bereitstellt.

38. Objektiv (816, 916, 1016, 1116) nach Anspruch 37
**dadurch gekennzeichnet,**
**dass** wenigstens eines der in den Ansprüchen 1-32 genannten optischen Elemente in das Objektiv (816, 916, 1016, 1116) integriert ist.

39. TIR-Mikroskop (10) umfassend
- ein Mikroskopgehäuse (18),
- ein eine optische Achse festlegendes Objektiv (16) aus mindestens einem jeweils mindestens eine Linse (48) umfassenden Linsensystem an einem Ende eines Durchgangs (19) des Mikroskopgehäuses (18),
- wenigstens eine Beobachtungseinrichtung (14, 22), insbesondere ein Okular, an einem anderen Ende des Durchgangs (19),
- eine Beleuchtungseinrichtung (24), deren Beleuchtungslicht von einer den Durchgang (19) senkrecht schneidenden Eintrittsebene (45) ausgehend wenigstens einen Beleuchtungsstrahl (44) bildet, der durch das Linsensystem verläuft und in einem vorgegebenen Winkel (β) zur optischen Achse größer Null auf einen Objektträger (36) auftrifft, welcher im Bereich eines Totalreflexionswinkels bei Auftreffen des Belechtungslichts auf eine Grenzfläche zwischen einem zu beobachtenden Objekt und einem Objektträger liegt
**dadurch gekennzeichnet,**
**dass** der von der Eintrittsebene (45) ausgehende wenigstens eine Beleuchtungsstrahl (44) von einer optischen Einrichtung bereitgestellt wird, deren im Bereich des Durchgangs (19) liegender Querschnitt wesentlich kleiner als der Querschnitt des Durchgangs (19) ist und daß der Beleuchtungsstrahl (44) zwischen der optischen Einrichtung auf dem Linsensystem mit Abstand zur optischen Achse verläuft.

40. TIR-Mikroskop (10) umfassend
- ein Mikroskopgehäuse (18),
- ein eine optische Achse (54) festlegendes Objektiv (16) aus mindestens einem jeweils mindestens eine Linse (48) umfassenden Linsensystem an einem Ende eines Durchgangs (19) des Mikroskopgehäuses (18),
- wenigstens eine Beobachtungseinrichtung (14, 22), insbesondere ein Okular, an einem anderen Ende des Durchgangs (19),
- eine Beleuchtungseinrichtung (24), deren Beleuchtungslicht wenigstens einen Beleuchtungsstrahl (44) bildet, der durch das Linsensystem verläuft, wobei der wenigstens eine Beleuchtungsstrahl in der der wenigstens einen Beobachtungseinrichtung (14, 22) zugewandten Brennebene (46) des wenigstens einen durchstrahlten Linsensystems (48) reell oder virtuell fokussiert ist und in einem vorgegebenen Winkel (β) zur optischen Achse (54) größer Null auf einen Objektträger (36) auftrifft, welcher im Bereich eines Totalreflexionswinkels bei Auftreffen des Beleuchtungslichts auf eine Grenzfläche zwischen einem zu beobachtenden Objekt und einem Objektträger liegt,
**dadurch gekennzeichnet,**
**dass** der Beleuchtungsstrahl von einer den Durchgang (19) zwischen der dem zu beobachtenden Objekt am nächsten angeordneten Frontlinse (48) des Objektivs (16) und der Beobachtungseinrichtung (14, 22) senkrecht schneidenden Eintrittsebene (45) ausgehend auf die der Beobachtungseinrichtung (14, 22) zugewandte Brennebene (46) des Objektivs (16) fokussiert ist und zwischen der Eintrittsebene und dem Linsensystem im Wesentlichen parallel und mit Abstand zur optischen Achse (54) verläuft, wobei in der Eintrittsebene (45) der fokussierte Beleuchtungsstrahl (44) von einer im Objektivbereich angeordneten optischen Einrichtung bereitgestellt wird, deren innerhalb der durch die nummerische Apertur des Objektivs (16) definierten Objektivöffnung liegender Querschnitt wesentlich kleiner als die Objektivöffnung ist, und die ein den Beleuchtungsstrahl (44) parallel und mit Abstand zur optischen Achse (54) einkoppelndes Element umfasst, das in radialer Richtung in Bezug auf die optische Achse (54) verlagerbar ist.

41. Mikroskop nach Anspruch 40, wobei das in radialer Richtung in Bezug auf die optische Achse (54) verlagerbare Einkoppelelement eine Adapteroptik (780; 1180) ist, durch die der Beobachtungsstrahl in der der Beobachtungseinrichtung (14, 22) zugewandten Brennebene (46) des Objektivs (16) fokussierbar ist.
